# EUROPÄISCHE PATENTSCHRIFT

(11) **EP 2 357 099 B1**
(45) Veröffentlichungstag und Bekanntmachung des Hinweises auf die Patenterteilung: **12.07.2017**
(21) Anmeldenummer: 11153948.2
(22) Anmeldetag: 10.02.2011
(51) Int. Cl.: B60G 21/055

(54) **Stabilisator und Verfahren zum Herstellen eines Stabilisators**
Stabiliser and method for manufacturing a stabiliser
Stabilisateur et procédé destiné à la fabrication d'un stabilisateur

(30) Priorität: 16.02.2010 DE 102010008164; 09.09.2010 DE 102010044799
(43) Veröffentlichungstag der Anmeldung: 17.08.2011
(73) Patentinhaber: Benteler Automobiltechnik GmbH, 33102 Paderborn (DE)
(72) Erfinder: Janzen, Andreas, 34439, Willebadessen-Peckelsheim (DE); Hammelmaier, Ullrich, 33104 Paderborn (DE); Saggel, Sebastian, 33098, Paderborn (DE); Berheide, Friso, 33378, Rheda-Wiedenbrück (DE); Hofmann, Bernhard, 34439, Willebadessen (DE); Smatloch, Dr. Christian, 33100, Paderborn (DE); Härtel, Dr. Wulf, 32549, Bad Oeynhausen (DE); Ditter, Christian, 33106, Paderborn (DE)
(74) Vertreter: Ksoll, Peter

(56) Entgegenhaltungen:
- EP-A2- 0 394 754
- DE-A1- 19 936 541
- DE-A1-102004 001 166
- DE-A1-102004 057 429
- GB-A- 2 352 697
- JP-A- 2005 002 365
- US-A1- 2008 277 398
- Bob Capudean: "Welding's effect on strengthening steel", The FABRICATOR , 11. Dezember 2003 (2003-12-11), XP055000700, Gefunden im Internet: URL:http://www.thefabricator.com/article/m etalsmaterials/weldings-effect-on-strength ening-steel [gefunden am 2011-06-15]
- Anonymous: "What The Welding Inspector Should Know About Preheating And Postweld Heat Treatment", ESAB Welding and Cutting , 1. Januar 2010 (2010-01-01), Seiten 1-2, XP055000522, Gefunden im Internet: URL:http://web.archive.org/web/20100101074 858/http://esabna.com/us/en/education/know ledge/weldinginspection/What-The-Welding-I nspector-Should-Know-About-Preheating-And- Postweld-Heat-Treatment.cfm [gefunden am 2011-06-10]
- Lieurade H. P. ET AL: "Efficiency of fatigue improvement techniques as a function of the type of welded joint", International Conferences on Shot Peening - ICSP-5 , September 1993 (1993-09), Seiten 359-370, XP055000521, Gefunden im Internet: URL:http://www.shotpeener.com/library/pdf/ 1993087.pdf [gefunden am 2011-06-10]

## Beschreibung

Die vorliegende Erfindung betrifft einen Stabilisator, welcher mindestens zwei Stabilisatorkomponenten aufweist gemäß dem Oberbegriff des Patentanspruchs 1. Die vorliegende Erfindung betrifft weiterhin ein Verfahren zum Herstellen eines Stabilisators gemäß dem Oberbegriff des Patentanspruchs 9.

Aus dem Stand der Technik sind verschiedene Verfahren zur Herstellung geteilter Rohrstabilisatoren bekannt. Aus der DE 199 30 444 C2 ist ein Koppelungsverfahren bekannt, bei dem eine drehfeste Verbindung zwischen einer Rohrstabilisatorhälfte und einem Schwenkmotor über separate Kuppelungsglieder realisiert wird. Nachteilig an so einem Verfahren ist ein relativ hoher Produktions- und Kostenaufwand durch die Verwendung verschiedener Bauteile und Kopplungsglieder.

Die DE 102 37 103 A1 zeigt ebenfalls ein Verfahren zum Herstellen eines geteilten Rohrstabilisators auf. Hierbei werden die Enden der Rohrstabilisatorhälften mittels Laserschweißen entweder direkt mit einem Gehäuseteil eines Schwenkmotors oder mit einem Verbindungselement verbunden. Um eine Überbeanspruchung der so hergestellten Schweißnaht im Fahrbetrieb bei der Übertragung hoher Drehmomente zu vermeiden, wird vorgeschlagen auf einen großen Durchmesser der Schweißfügung zu achten. Jedoch weisen die aus dieser Druckschrift bekannten Fügeverbindungen Eigenschaften auf, die den Anforderungen aufgrund des Einsatzfalles auftretenden wechseldynamischen Beanspruchungen nicht immer genügen.

Die DE 10 2004 057 429 B4 offenbart ein Verfahren zum Herstellen eines geteilten Rohrstabilisators mit einem zwei Rohrstabilisatorhälften miteinander koppelnden Schwenkmotor, bei dem die Rohrstabilisatorhälften direkt an den Schwenkmotor durch thermisches Fügen gekoppelt werden. Das Verfahren sieht vor, das Rohrende der Rohrstabilisatorhälfte durch gleichzeitiges Aufweiten und Stauchen unter Vergrößerung der Wanddicke für den Koppelungsprozess vorzubereiten, um hier eine gute Anbindung für die Schweißnaht und einen großen Durchmesser zur Übertragung hoher Drehmomente herzustellen.

Nachteilig hierbei ist jedoch, dass der Prozess der Rohrendenbearbeitung gemäß der DE 10 2004 057 429 B4 nicht immer produktionssicher gestaltet werden kann. Die Nachbearbeitung des Rohrendes kann notwendig sein. Ebenfalls entsteht durch das gleichzeitige Aufweiten und Stauchen ein omnidirektionaler Materialfluss, der sich nachteilig auf die Festigkeit im Anbindungsbereich auswirken kann. Weiterhin ist auch aus der DE 10 2004 057 429 A1, der DE 199 36 541 A1 und der JP 2005 002 365 A sowie der GB 2 352 697 A ein Kraftfahrzeugstabilisator sowie ein Verfahren zu dessen Herstellung bekannt. Das Dokument DE 199 36 541 A1 wird als nächstliegender Stand der Technik angesehen.

Aufgabe der vorliegenden Erfindung ist es daher, einen mehrteiligen Stabilisator zur Verfügung zu stellen, mit dem es möglich ist, produktionssicher und kostengünstig eine hochfeste dauerhaltbare Anbindung zu realisieren. Weiterhin ist es Aufgabe der Erfindung, ein Verfahren zur Herstellung eines mehrteiligen Stabilisators zur Verfügung zu stellen.

Die zuvor genannte Aufgabe wird erfindungsgemäß mit einem Stabilisator gemäß Patentanspruch 1 gelöst. Die verfahrenstechnische Aufgabe wird weiterhin mit einem Verfahren zur Herstellung eines Stabilisators gemäß Patentanspruch 9 gelöst. Vorteilhafte Weiterbildungen der vorliegenden Erfindung sind Bestandteil der abhängigen Patenansprüche.

Der erfindungsgemäße Stabilisator, welcher mindestens zwei Stabilisatorkomponenten aufweist, die stoffschlüssig mittels thermischem Fügen miteinander gekoppelt sind, ist dadurch gekennzeichnet, dass eine durch das thermische Fügen entstandene Wärmeeinflusszone nach der Koppelung in mehreren Stufen und/oder Schritten wämebehandelt ist, wobei die Wärmebehandlung gezielt auf die Wärmeeinflusszone gerichtet durchgeführt ist und nach der Wärmebehandlung durch Verfestigungsstrahlen nachbehandelt ist.

Im Rahmen der Erfindung sind unter Stabilisatorkomponenten Komponenten zu verstehen, die beispielsweise ein Rohr, ein Rohrabschnitt, ein Vollmaterialabschnitt, ein Aktuator, oder aber verschiedene andere Komponenten aufweisen, die sich hauptsächlich in Längsrichtung des jeweiligen Stabilisators auf dessen betrachteten Abschnitt erstrecken. Besonders vorteilig bei der vorliegenden Erfindung ist, dass die Stabilisatorkomponenten, welche zumeist aus metallischen Werkstoffen, beispielsweise Stahlwerkstoffen oder aber auch Leichtmetallwerkstoffen bestehen, miteinander gekoppelt werden.

Die Koppelung erfolgt dabei durch thermisches Fügen, beispielsweise durch einen Schweißprozess, der in Form eines Laserschweißens, MIG-, WIG- oder MAG-Schweißens oder aber auch in Form eines Reibrührschweißens oder Reibschweißens erfolgen kann. Durch das thermische Fügen entsteht eine Wärmeeinflusszone in den jeweiligen Endbereichen der miteinander gekoppelten Komponenten. Die Wärmeeinflusszone weist meist unerwünschte Gefügestrukturen auf, was sich wiederum nachteilig auf die Lebensdauer bzw. Dauerschwingfestigkeit auswirkt.

Beispielsweise können vorkonfektionierte gehärtete Komponenten durch die Wärmeeinflusszone in ihrer Festigkeit beeinträchtigt sein, was sich nachteilig auf die Lebensdauer des Rohrstabilisators auswirkt. Weiterhin können in den Wärmeeinflusszonen Lufteinschlüsse oder aber auch harte Gefügestrukturen vorliegen, die sich wiederum nachteilig auf die Dauerhaltbarkeit der hergestellten Verbindung auswirken.

Die erfindungsgemäße Lösung des partiellen Wärmebehandelns der Wärmeeinflusszone ermöglicht somit bei dem hergestellten Stabilisator diese unerwünschten Effekte des thermischen Fügens so nachzubehandeln, dass sie zumindest anforderungstechnisch keine Relevanz auf den Betrieb und die Langlebigkeit des Stabilisators haben. Unter kostentechnischen Aspekten ist es somit möglich, den Stabilisator nachzubehandeln, sodass dieser keine Beeinträchtigungen im Torsionsverhalten bzw. in der Langlebigkeit, hervorgerufen durch die Wärmeeinflusszone des thermischen Fügens, mehr aufweist.

In einer besonders bevorzugten Ausführungsvariante der vorliegenden Erfindung sind die Stabilisatorkomponenten durch eine umlaufende Fügenaht miteinander gekoppelt, wobei die Fügenaht und die die Fügenaht umgebende Wärmeeinflusszone wärmebehandelt sind. Im Rahmen der Erfindung ist unter einer Fügenaht, die umlaufend ist, eine Fügenaht zu verstehen, die sich auf die Stabilisatorachse bezogen einmal umlaufend über den Stabilisator erstreckt. Besonders vorteilig durch die umlaufende und ganzflächige Wärmebehandlung der Fügenaht sowie der die Fügenaht umgebenden Wärmeeinflusszone ist, dass die unerwünschten Gefügestrukturänderungen, hervorgerufen durch das thermische Fügen, nahezu gänzlich verschwinden. Es wird eine stoffschlüssige Koppelung der Stabilisatorkomponten hergestellt und eine durchgehend homogene Gefügestruktur in der Wärmeeinflusszone erzeugt. Bevorzugt wird hier die Bildung eines feinkörnigen martensitischen Gefüges hergestellt. Aufgrund des Schweißzusatzes während des thermischen Fügeprozesses ist das Gefügte hier nicht durchgehend homogen, was jedoch durch die erfindungsgemäße zumindest partielle Wärmebehandlung kompensiert wird. Dies wirkt sich besonders vorteilig auf das gewünschte Langlebigkeitsverhalten des Stabilisators aus.

Vorzugsweise sind zwei Stabilisatorhälften über einen Aktuator miteinander verbunden. Erfindungsgemäß handelt es sich sowohl bei den Stabilisatorhälften als auch dem Aktuator um Stabilisatorkomponenten. Bei den Stabilisatorhälften ist im Rahmen der Erfindung eine Aufteilung in Stabilisatorhälften, die eine Größenordnung von ca. 50:50 über die Längsachse des Aktuators aufweist, zu verstehen. Es ist aber auch im Rahmen der Erfindung bei der Erwähnung von zwei Stabilisatorhälften zu verstehen, dass der Stabilisator über seine Längsachse in eine Aufteilung 90:10, 80:20, 70:30 oder 60:40 bzw. eine Mischform der zuvor genannten Aufteilungsverhältnissen aufgeteilt ist.

Diese Stabilisatorhälften sind dann über einen Aktuator miteinander verbunden. Ein Aktuator ist im Rahmen der Erfindung ein Stellmittel, dass vorzugsweise elektromechanisch aber auch pneumatisch-hydraulisch oder ähnlich angetrieben ist, um das Wankverhalten aktiv zu verstellen. Die Koppelungen der Stabilisatorhälften mit dem Aktuator bzw. der Stabilisatorhälften untereinander, sind erfindungsgemäß wiederum nach dem thermischen Fügen wärmebehandelt. Durch den Aktuator entstehen erhöhte Torsionskräfte innerhalb des Stabilisators selber. Diese erhöhten Kräfte werden besonders vorteilig durch die erfindungsgemäße Wärmenachbehandlung nach dem thermischen Fügen durch den Stabilisator in den Koppelungsstellen weitergeleitet. Der durch Kräfte auftretende Spannungsverlauf ist somit optimiert.

In einer weiteren bevorzugten Ausführungsform weist jede Stabilisatorhälfte einen Flansch und ein an den Flansch stoffschlüssig gekoppeltes Rohr auf. Im Rahmen der Erfindung ist unter einem Flansch ein Anbindungsmittel zu verstehen, dass beispielsweise ein Guss-, oder Fräsbauteil oder ein ähnliches Bauteil ist. Der Flansch ist wiederum aus einem metallischen Werkstoff, beispielsweise aus einem Stahlwerkstoff oder aber auch einem Leichtmetall hergestellt. Der Flansch und auch die Stabilisatorhälfte in Form eines Rohrabschnittes oder aber auch eines massiven Materialabschnittes sind wiederum stoffschlüssig miteinander gekoppelt.

Besonders vorteilig im Rahmen der Erfindung ist es beispielsweise, dass durch Reibrührschweißen die Koppelung eines Stahlwerkstoffes mit einem Leichtmetallwerkstoff, beispielsweise einem Aluminiumwerkstoff ausführbar ist. Die Gefügestrukturänderungen an der Koppelungsstelle und auch an der Wärmeeinflusszone, die die Koppelungsstelle umgibt, können durch die erfindungsgemäße Wärmenachbehandlung homogenisiert werden. Diese Homogenisation liegt in einem erwünschten Rahmen, sodass keine Aufhärtungen bzw. spröden Gefügestrukturen in der Wärmeeinflusszone oder der Koppelungsstelle verbleiben. Dies wirkt sich insbesondere auf die Langlebigkeit sowie auf das Ansprechverhalten des Stabilisators aus.

In einer weiteren bevorzugten Ausführungsvariante weist der Flansch rohrseitig einen Anschlussbereich auf, wobei der Anschlussbereich vorzugsweise als Anschlussstutzen ausgebildet ist. Im Rahmen der Erfindung ist unter einem Anschlussstutzen ein vorzugsweise zylinderförmiger Fortsatz des Flansches zu verstehen. Es kann allerdings auch ein trichterförmiger, konischer, kegelstumpfförmiger oder ähnlicher Fortsatz sein. Im Bereich der Koppelungsstelle mit dem Ende der Stabilisatorhälfte weist der Anschlussstutzen vorzugsweise einen Außen- und/oder Innendurchmesser auf, der im Wesentlichen den geometrischen Abmessungen des Rohrendes entspricht. Dies wirkt sich insbesondere vorteilig auf die damit hergestellte Schweißverbindung aus. Im Rahmen der Erfindung kann der Anschlussbereich durch den Anschlussstutzen in Form eines Stumpfschosses oder aber einer Überlappung oder beispielsweise auch einer Passung ausgebildet sein. Hierbei kann beispielsweise der Anschlussstutzen die Stabilisatorhälfte umfassen oder aber auch im Falle eines Rohrstabilisators die Rohrstabilisatorhälfte den Anschlussstutzen umfassen.

In einer weiteren bevorzugten Ausführungsvariante ist das Rohr an seinem flanschseitigen Rohrende gegenüber einem Ausgangsdurchmesser des Rohres aufgeweitet, wobei die Wanddicke am aufgeweiteten Ende vorzugsweise im Wesentlichen der Rohrwanddicke entspricht. Durch das aufgeweitete Rohrende kann über die die Koppelungsstelle bei geringeren auftretenden Spannungen, hervorgerufen durch Torsion, ein gleiches oder höheres Torsionsmoment übertragen werden. Durch das Aufweiten würde sich jedoch die Wanddicke am aufgeweiteten Ende verringern. Durch einen Stauchprozess kann diesem entgegengewirkt werden, sodass die Wanddicke im Wesentlichen der Wanddicke des Ausgangsrohres entspricht. Im Anbindungsbereich an den Flansch sollten im Rahmen der Erfindung sowohl der Stabilisator, als auch der Anbindungsbereich des Flansches eine nahezu gleiche Wandstärke aufweisen. Dies wirkt sich besonders vorteilig auf die herzustellende Koppelung aus.

Vorzugsweise entspricht der Außendurchmesser des Anschlussstutzen im Wesentlichen dem Außendurchmesser des aufgeweiteten Rohrendes. Auch dieses wirkt sich besonders vorteilig auf die hergestellte thermische Fügeverbindung aus. Ebenfalls ist im Rahmen der Erfindung eine nach dem thermischen Fügen nachgeschaltete Wärmebehandlung durch gleiche Außendurchmesser im Anbindungsbereich einfacher ausführbar.

In einer weiteren besonders bevorzugten Ausführungsvariante im Rahmen der Erfindung ist die Wärmebehandlung in mehreren Stufen und/oder Schritten erfolgt. Im Rahmen der Erfindung ist unter mehreren Stufen zu verstehen, dass die Wärmebehandlung so durchgeführt ist, dass innerhalb eines Wärmebehandlungsschrittes mehrere zeitlich unmittelbar aufeinander folgende Stufen der Wärmebehandlung durchgeführt werden. Diese Stufen können beispielsweise darin bestehen, die Temperatur mehrfach zu steigern bzw. abzusenken und/oder für verschiedene Zeitbereiche die Temperatur zu halten. Unter Wärmebehandlungsschritten ist im Rahmen der Erfindung zu verstehen, dass die Wärmebehandlung in mehreren zeitlich beabstandeten Schritten durchgeführt wird. Beispielsweise erfolgt ein Schritt, danach wird das hergestellte Bauteil abgekühlt, ruhen gelassen und zeitlich versetzt hierzu erfolgt ein nächster Behandlungsschritt.

In einer weiteren bevorzugten Ausführungsvariante der vorliegenden Erfindung ist der Stabilisator durch Verfestigungsstrahlen nachbehandelt. Insbesondere sind die gekoppelten und wärmebehandelten Stellen durch Verfestigungsstrahlen nachbehandelt. Hierdurch ergibt sich insbesondere der Vorteil, dass dem Oberflächenbereich durch das Verfestigungsstrahlen hochfeste mechanische Eigenschaften verliehen werden.

Das erfindungsgemäße Verfahren zur Herstellung eines Stabilisators, wobei mindestens zwei Stabilisatorkomponenten mittels thermischem Fügen miteinander verbunden werden, ist dadurch gekennzeichnet, dass die durch das thermische Fügen entstandene Wärmeeinflusszone in mehreren Stufen und/oder Schritten wärmebehandelt wird, wobei die Wärmebehandlung gezielt auf die Wärmeeinflusszone gerichtet durchgeführt wird und nach der Wärmebehandlung durch Verfestigungsstrahlen nachbehandelt wird.

Im Rahmen der Erfindung werden die Stabilisatorkomponenten mittels thermischen Fügens gekoppelt. Hierdurch entsteht je nach Fügeprozess eine mehr oder minder große Wärmeeinflusszone im die Fügezone umliegenden Werkstoffgefüge. Diese Wärmeeinflusszone sowie die darin befindliche Fügenaht werden nach dem thermischen Fügen wärmebehandelt. Hierdurch tritt eine Änderung des Werkstoffgefüges ein, sodass eine eventuelle durch das thermische Fügen entstandene Schwächung oder aber unerwünschte Aufhärtung durch die Wärmenachbehandlung ausgeglichen wird.

Im Rahmen der Erfindung ist das Verfahren weiterhin dadurch gekennzeichnet, dass folgende Verfahrensschritte vor der Wärmebehandlung ausgeführt werden:
- Bereitstellen eines Rohres;
- Aufstauchen eines Rohrendes des Rohres, bei im Wesentlichen konstantem Außendurchmesser und sich verringerndem Innendurchmesser;
- Aufweiten des gestauchten Rohrendes auf ein Endmaß in einem oder mehreren Aufweitvorgängen;
- Stoffschlüssiges Verbinden des aufgestauchten und aufgeweiteten Rohrendes mit einem Anschlussbereich des Aktuators mittels thermischem Fügen.

Im Rahmen der Erfindung wird die thermische Wärmebehandlung der durch das thermische Fügen entstandenen Wärmeeinflusszone sowie der darin befindlichen Fügenaht nach den zuvor genannten Verfahrensschritten ausgeführt. Die Verfahrensschritte können jedoch auch chronologisch in anderer Reihenfolge ausgeführt werden. Die Wärmebehandlung wird jedoch immer nach dem thermischen Fügen ausgeführt. Sie muss jedoch nicht unmittelbar nach dem thermischen Fügen im Rahmen der Erfindung ausgeführt werden, sie kann auch Zwischenschritte aufweisen, also zeitlich beabstandet ausgeführt werden.

Mit dem erfindungsgemäßen Verfahren ist es möglich, einen geteilten Stabilisator mit einem darin befindlichen aktiven Stellaktuator herzustellen, der besonders kostengünstig produziert werden kann. Der mit dem erfindungsgemäßen Verfahren hergestellte Stabilisator weist eine besonders hohe Langlebigkeit und ein optimiertes Torsionsverhalten auf. Durch die gezielte Reduzierung bzw. Auslöschung der unerwünschten Gefügeumwandlung bzw. Schwächung, die durch das thermische Fügen hervorgerufen ist, ist es im Rahmen der Erfindung möglich, den geteilten Stabilisator, insbesondere die Koppelungsstellen, so zu optimieren, dass eine Überdimensionierung nicht stattfindet. Der mit dem erfindungsgemäßen Verfahren hergestellte Stabilisator ist somit bezogen auf sein Gewicht und auch auf seine möglichen zu übertragenden Kräfte optimal hergestellt.

In einer besonders bevorzugten Ausführungsvariante wird die Wärmebehandlung durch Induktion, Infraroterwärmung, Ofenerwärmung und/oder Heißlufterwärmung durchgeführt. Hierdurch ergibt sich der Vorteil, dass die Wärmebehandlung besonders gezielt auf die Wärmeeinflusszone gerichtet durchgeführt werden kann. Bereiche außerhalb der Wärmeeinflusszone werden durch die zuvor beschriebenen Wärmebehandlungsverfahren nicht oder nur in tolerierbarem Maße tangiert. Weiterhin bieten die Induktionserwärmung und/oder die Infraroterwärmung eine besonders kostengünstige Möglichkeit der Wärmebehandlung.

Im Rahmen der Erfindung ist unter einer Wärmebehandlung aber auch ein Glühen, ein Weichglühen, ein Anlassen aber auch Härten zu verstehen. Die Notwendigkeit und auch die Wahl der verschiedenen Wärmebehandlungsmöglichkeiten sind abhängig von der geforderten Belastbarkeit der Anbindung sowie von den eingesetzten Materialien bzw. Werkstoffen. Beispielsweise ist die Wärmebehandlungsmöglichkeit des Aktuators durch Einsatz verschiedener Elektronikkomponenten eingeschränkt. Durch gezielte Wärmebehandlung wird jedoch kein Schaden an den Elektronikkomponenten verursacht.

Weiterhin ist das erfindungsgemäße Verfahren dadurch gekennzeichnet, dass die Fügenaht mittels Verfestigungsstrahlen nachbehandelt wird. Das Verfestigungsstrahlen initiiert dabei Druckeigenspannung in der Randschicht des Rohrendes oder aber des Anbindungsbereiches des Aktuators sowie in der Wärmeeinflusszone. Vorzugsweise wird das Rohrende auch von innen durch Verfestigungsstrahlen behandelt. All diese Punkte wirken sich besonders vorteilig auf die hohe Festigkeit und somit auf ein hohes mögliches zu übertragendes Torsionsmoment des Anwendungsbereichs aus. Ebenfalls wirkt sich das Verfestigungsstrahlen besonders vorteilig auf die durch den thermischen Fügevorgang erzeugte Fügenaht sowie die Wärmeeinflusszone aus.

Ein weiterer sich ergebender Vorteil ist, dass durch das getrennte Stauchen und Aufweiten des Rohrendes sowie das Aufweiten in mehreren Arbeitsvorgängen der Materialfluss und die daraus resultierenden Spannungen innerhalb des Rohrendes gezielt gesteuert werden können. Aufwendige Nachbearbeitungen oder aber auch Korrekturprozesse während des Verfahrens entfallen damit nahezu gänzlich. Dies wirkt sich wiederum vorteilig auf die Produktionssicherheit und auch auf die zu erwartenden Produktionskosten aus.

Das Aufweiten des gestauchten Rohrendes erfolgt im Rahmen der Erfindung auf das ein- bis dreifache des Ausgangsdurchmessers. Besonders bevorzugt wird das Rohrende auf das 1,7- bis 2,2- fache des Ausgangsdurchmessers aufgeweitet. Die Wandstärke des gestauchten und aufgeweiteten Rohrendes beträgt das ein- bis dreifache der Ausgangswandstärke des Rohres. Besonders bevorzugt beträgt die Wandstärke des gestauchten und aufgeweiteten Rohrendes das 1,3- bis 1,6-fache der Wandstärke des Rohres. Hierdurch ergibt sich eine besonders vorteilige Möglichkeit das Rohrende durch thermisches Fügen mit dem Aktuator zu koppeln. Durch die gegenüber dem Ausgangszustand erhöhte Wandstärke erfolgt gerade unter Berücksichtigung einer Wärmeeinflusszone einer thermischen Fügenaht eine besonders gute stoffschlüssige Verbindung.

Im Rahmen der Erfindung erfolgt von dem gestauchten und aufgeweiteten Rohrende auf den restlichen Teil des Rohres ein harmonischer Übergang. Dies bedeutet, dass die entstehenden Biegeradien von einem aufgeweiteten Außendurchmesser auf einen Rohraußendurchmesser im Ausgangszustand einen geringen Wert aufweisen. Der Übergang erfolgt trichterförmig und/oder trompetenförmig. Die Übergangsradien werden dabei im Rahmen der Erfindung so gewählt, dass sie dem drei- bis zehnfachen der Wandstärke des Rohres im Ausgangszustand entsprechen. Im Rahmen der Erfindung wird der Übergang zwischen gestauchten und aufgeweiteten Außendurchmesser und Außendurchmesser des Rohres bevorzugt kegelförmig ausgebildet. Die Übergangsradien weisen bevorzugt einen Kegelwinkel zwischen 15 und 25 Grad, besonders bevorzugt zwischen 19 und 21 Grad auf.

In einer bevorzugten Ausführungsform des erfindungsgemäßen Verfahrens werden die Rohrstabilisatorhälfte und/oder der Aktuator wärmebehandelt. Die Wärmebehandlung kann dabei während, zwischen oder nach den einzelnen Verfahrensschritten durchgeführt werden. Unter einer Wärmebehandlung ist im Rahmen der Erfindung eine Wärmebehandlung zu verstehen, die beispielsweise alle Bauteile durch Einbringen der Bauteile in einen Wärmebehandlungsofen umfasst. Die Wärmebehandlung kann im Rahmen der Erfindung aber auch nur partiell stattfinden, so dass beispielsweise nur das Rohrende wärmebehandelt wird.

Unter einer Wärmebehandlung ist im Rahmen der Erfindung ein Glühen, ein Weichglühen, ein Anlassen oder aber auch Härten zu verstehen. Die Notwendigkeit und auch die Wahl der verschiedenen Wärmebehandlungsmöglichkeiten sind abhängig von der zu erwartenden Belastbarkeit der Anbindung sowie von den eingesetzten Materialen. Beispielsweise ist die Wärmebehandlungsmöglichkeit des Aktuators durch Einsatz verschiedener Elektronikkomponenten eingeschränkt. Auch eine Erwärmung durch Induktionen ist im Rahmen der Erfindung vorstellbar.

In einer weiteren bevorzugten Ausführungsform wird das Rohrende im erwärmten Zustand gestaucht. Weiterhin wird im Rahmen der Erfindung bevorzugt das Rohrende im erwärmten Zustand aufgeweitet. Durch die Umformung des Rohrendes im jeweils erwärmten Zustand verringern sich die einzusetzenden Umformkräfte und auch die auftretenden Spannungen innerhalb des jeweiligen umgeformten Bauteilabschnittes sowie in den daran angrenzenden Abschnitten. Diese beiden Punkte wirken sich dabei wieder besonders positiv auf die Produktionssicherheit sowie die Produktionskosten aus, beispielsweise werden durch geringere Umformkräfte kleinere und somit kostengünstigere Werkzeugmaschinen benötigt. Die gezielte Erlangung eines benötigten Werkstoffgefüges im Anbindungsbereich bringt keine aufwändigen Nachbearbeitungsmaßnahmen mit sich, was sich ebenfalls kostengünstig auf den gesamten Produktionsprozess auswirkt.

In einer besonders bevorzugten Ausführungsform wird die Rohrstabilisatorhälfte umformtechnisch bearbeitet und mit über ihre Länge verteilten unterschiedlichen Querschnittsabschnitten versehen. Unter unterschiedlichen Querschnittsabschnitten sind im Rahmen der Erfindung Abschnitte auf der Rohrstabilisatorhälfte zu verstehen, die in ihren Querschnitten verschieden sind. Die Unterschiede können dabei in der Größe von Innen- und Außendurchmesser, im Verhältnis von Innen- zu Außendurchmesser und/oder aber auch in unterschiedlicher Wanddicke realisiert werden. Das umformtechnische Bearbeiten der Rohrstabilisatorhälfte kann im Rahmen der Erfindung dabei vor, während, zwischen oder nach den einzelnen Verfahrensschritte des erfindungsgemäßen Verfahren zur Anbindung der Rohrstabilisatorhälfte an den Aktuator durchgeführt werden. Gerade im Bezug auf die einfache Produzierbarkeit ist es vom besonderen Vorteil, das umformtechnische Bearbeiten zwischen oder nach dem Verfahren durchzuführen. In einer weiteren bevorzugten Ausführungsvariante wird der Stabilisator beschichtet. Die Beschichtung kann dabei eine Korrosionsbeschichtung, eine Lackierung oder eine ähnliche Beschichtung sein. Die Beschichtung wirkt sich dabei auf die Langlebigkeit in Form von Korrosionsschutz des Stabilisators insbesondere der Fügestelle aus. Bei der Beschichtung kann es sich aber auch um eine Beschichtung handeln, die mechanische Eigenschaften des Stabilisators weiter verstärkt.

In einer weiteren besonders bevorzugten Ausführungsvariante des erfindungsgemäßen Verfahrens werden die Rohre bzw. Stabilisatorhälften vor, während oder nach dem gesamten Verfahren weiterhin gebogen. Dieses Biegen entspricht dabei dem in Form bringen für die gewünschte Endkonfiguration des Stabilisators. Parallel zum Biegen oder aber dem Biegen nachgeschaltet bzw. auch dem Biegen vorangestellt, kann eine weitere Wärmebehandlung des Rohres in dem Bereich der zu biegenden Abschnitte anhängig sein.

Weitere Vorteile, Merkmale, Eigenschaften und Aspekte der vorliegenden Erfindung ergeben sich aus der folgenden Beschreibung, eine bevorzugte Ausführungsform anhand der schematischen Zeichnung. Diese dient dem einfachen Verständnis der Erfindung. Es zeigen:
- Figur 1: einen Abschnitt eines erfindungsgemäßen Stabilisators mit einem Flansch und einem Stabilisatorprofil;
- Figur 2: ein erfindungsgemäß hergestellter Abschnitt eines Stabilisators mit einem Stumpfstoß;
- Figur 3: eine erfindungsgemäße Anbindung zwischen einem Stabilisatorprofil und einem Flansch mit einer Überlappung;
- Figur 4: eine zwischen Stabilisatorprofil und Flansch hergestellte Passung;
- Figur 5a - d: ein erfindungsgemäßes Verfahren zum Aufweiten einer Rohrstabilisatorhälfte mit einzelnen Verfahrensschritten und
- Figur 6: einen Rohrstabilisator mit zwei Rohrstabilisatorhälften, die an einen Aktuator gekoppelt sind.

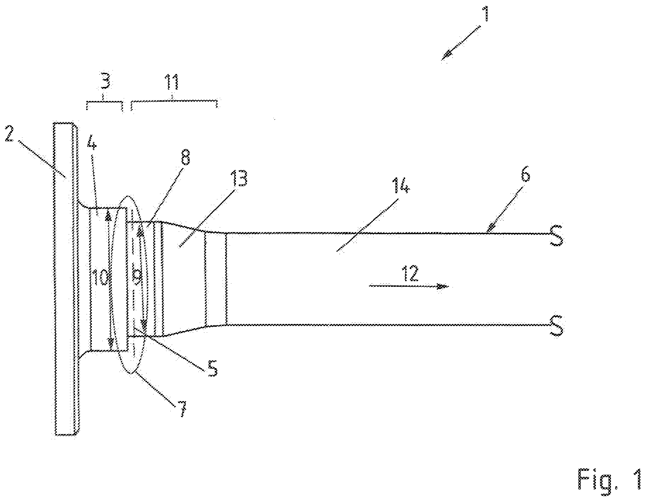

Figur 1 zeigt einen Abschnitt eines erfindungsgemäßen Stabilisators 1. Hierbei ist ein Flansch 2 dargestellt, der einen Anschlussbereich 3 in Form eines Anschlussstutzens 4 aufweist. An den Anschlussstutzen 4 ist über eine Fügenaht 5 ein Stabilisatorprofil 6 gekoppelt. Im Bereich der Fügenaht 5 befindet sich eine Wärmeeinflusszone 7.

Die Wärmeeinflusszone 7 ist erfindungsgemäß durch eine Wärmebehandlung nachbehandelt. Die Stabilisatorhälfte 6 weist an ihrem flanschseitigen Ende eine Aufweitung 8 auf. Die Aufweitung 8 hat dabei im Wesentlichen einen Außendurchmesser 9, der dem Außendurchmesser 10 des Anschlussstutzens 4 entspricht. Von dem flanschseitigen Rohrende 11 der Stabilisatorhälfte 6 erstreckt sich in Profilrichtung 12 ein trichterförmiger Anbindungsabschnitt 13 des Rohres.

Der Anbindungsabschnitt 13 geht über in den Rohrabschnitt 14 der Stabilisatorhälfte 6. Der Flansch 2 wiederum wird an einen hier nicht dargestellten Aktuator gekoppelt. Auf die Bildebene bezogen auf der rechten Seite der Stabilisatorhälfte 6 wird der Stabilisator 1 an hier nicht näher dargestellte Anbindungspunkte der Achse bzw. des Radträgers gekoppelt.

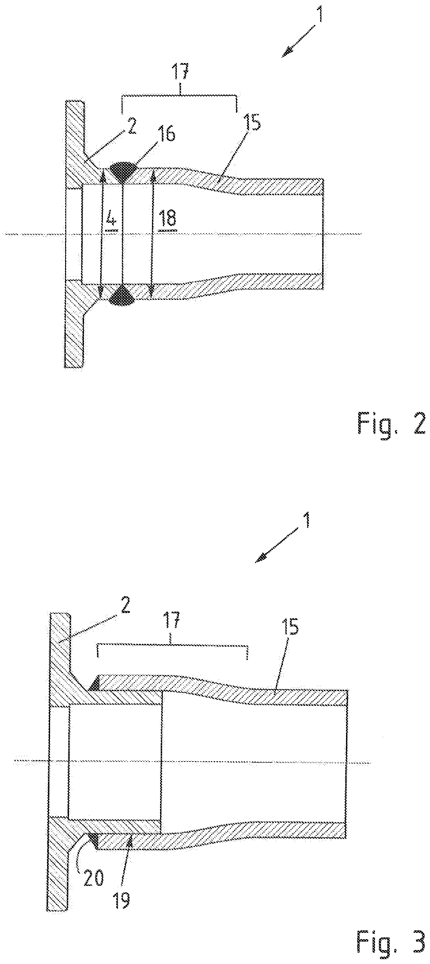

Figur 2 zeigt einen Abschnitt eines erfindungsgemäß hergestellten Stabilisators 1. Gezeigt ist hier wiederum ein Flansch 2, der mit einem Rohrprofil 15 als Stumpfstoß gekoppelt ist. Die Fügenaht ist hier in Form einer I-Naht 16 ausgebildet. Das Rohrprofil 15 selbst ist an seinem flanschseitigen Ende 17 aufgeweitet, so dass der Außendurchmesser des Flansches 2 dem Außendurchmesser 18 im Wesentlichen gleicht.

In Figur 3 ist eine zweite Ausführungsvariante eines Abschnitts eines Stabilisators 1 gezeigt. Hierbei überlappt das Rohrprofil 15 den Flansch 2 im Bereich seines flanschseitigen Endes 17 zumindest bereichsweise. Die Überlappung 19 kann dabei im Rahmen der Erfindung auch in Form einer Passung ausgeführt sein. Der Flansch 2 und auch das Rohrprofil 15 sind weiterhin über eine Kehlnaht 20 miteinander verbunden, die mit dem erfindungsgemäßen Verfahren zumindest partiell wärmenachbehandelt worden ist. Im Rahmen der Erfindung kann im Bereich der Überlappung 19 auch ein weiterer formschlüssiger Eingriff oder aber auch ein kraftschlüssiger und/oder stoffschlüssiger Eingriff in Form beispielsweise einer Klebung ausgebildet sein.

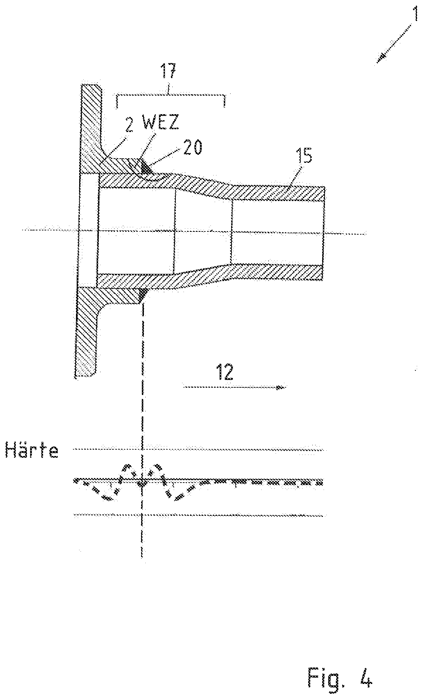

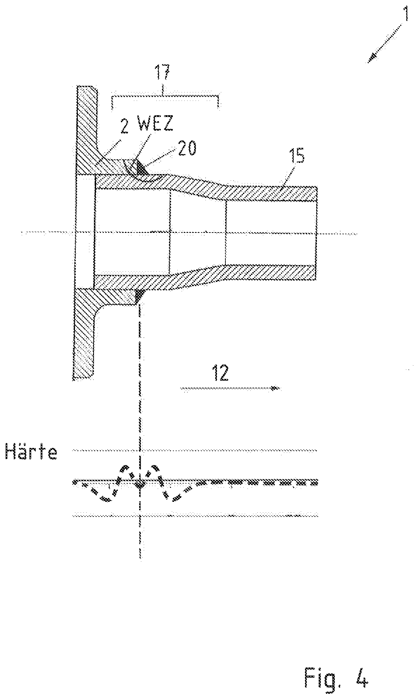

Figur 4 zeigt eine weitere Ausführungsvariante eines Abschnitts eines erfindungsgemäßen Stabilisators 1 in Form eines Rohrstabilisators. Hierbei ist das Rohrprofil 15 in den Flansch 2 eingeschoben. Der Einschub erfolgt an dem flanschseitigen Ende 17 des Rohrprofils 15 und kann, analog zu Figur 3, beispielsweise in Form einer Passung oder ähnlichem ausgebildet sein. Ergänzend hierzu ist auch der Stabilisator 1 gemäß Figur 4 stoffschlüssig über eine Kehlnaht 20 miteinander gekoppelt. Die Kehlnaht 20 und auch die die Kehlnaht 20 umgebende Wärmeeinflusszone WEZ sind auch hier mit dem erfindungsgemäßen Verfahren zumindest partiell wärmenachbehandelt. Weiterhin ist in Figur 4 eine schematische Darstellung des Härteverlaufes in Profilrichtung gezeigt. Zu erkennen ist, dass bei der gestrichelten Linie L ein starkes Schwanken der Härte im Bereich der Schweißnaht ausgebildet ist. Nach der erfindungsgemäßen zumindest partiellen Wärmebehandlung entsteht ein homogener Härteverlauf, der durch die durchgezogene Linie H dargestellt ist.

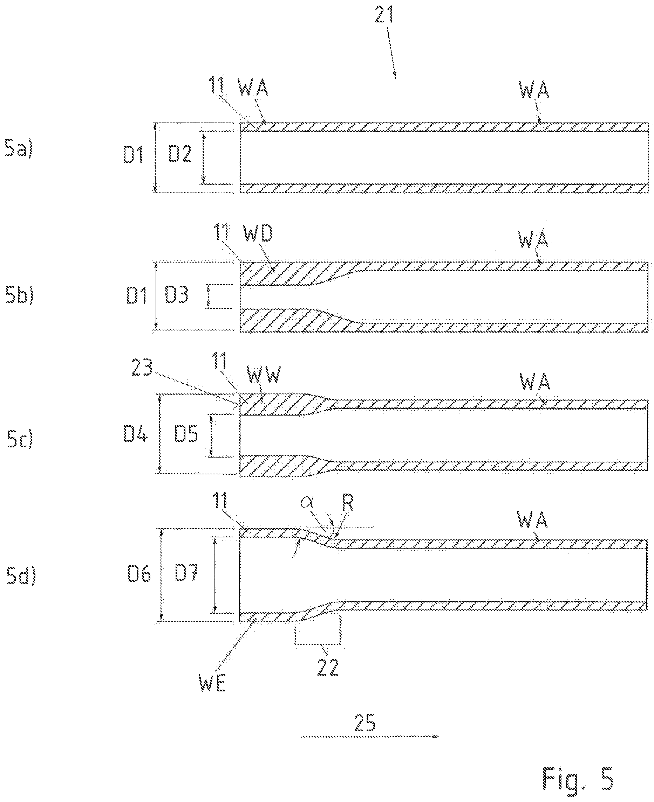

Figur 5a zeigt einen ersten Verfahrensschritt, wobei ein Rohr 21 bereitgestellt wird, das sich in einem Ausgangzustand befindet und zu einem kegelförmigen Abschnitt 22 aufgeweitet wird. In dem Ausgangszustand hat das Rohr 21 einen Außendurchmesser D1 und einen Innendurchmesser D2.

Figur 5b zeigt einen zweiten Verfahrensschritt, wobei in einem zweiten Verfahrensschritt ein Rohrende 11 gestaucht wird. Das Rohrende 11 hat während des Stauchvorganges im Wesentlichen den Außendurchmesser D1, hierzu jedoch einen verringerten Innendurchmesser D3. Der Innendurchmesser D3 ist während und nach dem Stauchvorgang kleiner als der Innendurchmesser D2 des Ausgangszustandes. Das Rohrende 11 weist folglich eine verdickte Wandstärke WD im Vergleich zur Wandstärke WA des übrigen Rohres 21 auf.

In einem weiteren Verfahrensschritt wird das Rohrende 11 aufgeweitet. Figur 5c zeigt eine mögliche Variante eines ersten Aufweitschrittes. In der Figur 5c ist zu erkennen, dass das Rohrende 11 durch Aufweiten einen größeren Außendurchmesser D4 gegenüber dem Außendurchmesser D1 des Ausgangszustandes erhält. Ebenfalls vergrößert sich ein Aufweitinnendurchmesser D5. Der Aufweitinnendurchmesser D5 ist dabei größer als der verringerte Innendurchmesser D3. Je nach Aufweitstufe, die in diesem Verfahrensschritt durchgeführt wird, ist der Aufweitinnendurchmesser D5 kleiner, gleich oder größer als der Innendurchmesser D2 des Ausgangszustandes. Gleichzeitig verringert sich die Wandstärke WW während des Aufweitvorganges, aufgrund einer Änderung der Querschnittsfläche 23 im Bereich des Rohrendes 11. Die Wandstärke WW während und nach Abschluss des Aufweitvorganges ist kleiner als die Wandstärke WD, die während und nach dem Stauchvorgang am Rohrende 11 vorliegt.

Figur 5d zeigt das Rohr 21 mit aufgeweitetem Rohrende 11 nach Abschluss der Verfahrensschritte Stauchen und Aufweiten. In einem Rohrendbereich 24 weist das aufgeweitete Rohrende 11 einen Endaußendurchmesser D6 und einen Endinnendurchmesser D7 auf. Der Rohrendaußendurchmesser D6 und der Rohrendinnendurchmesser D7 sind dabei größer als der Außendurchmesser D1 des Ausgangszustandes sowie der Innendurchmesser D2 des Ausgangszustandes. Von dem Endaußendurchmesser D6 und dem Endinnendurchmesser D7 aus verläuft der Rohrendbereich 24 in Rohrrichtung verjüngend. Das Rohr 21 hat im Rohrendbereich 24 eine Endwandstärke WE.

Figur 5d zeigt weiterhin einen kegelförmigen Abschnitt 21, der in Rohrrichtung 25 jeweils begrenzt ist von zwei Radien R. Der zwischen den Biegeradien liegende kegelförmige Abschnitt 22 weist in Relation zu dem aufgeweiteten Rohrende 11 und dem Rohr 21 einen Kegelwinkel α zwischen 15 und 25 Grad, bevorzugt zwischen 19 und 21 Grad, auf.

In der hier gezeigten Ausführungsvariante entspricht die Endwandstärke WE im Wesentlichen der Wandstärke WA des Ausgangszustandes. Der Rohrendbereich 24 verläuft verjüngend in Rohrrichtung 25, wobei dieser in der hier gezeigten Ausführungsvariante im Wesentlichen über den gesamten Bereich die gleiche Endwandstärke WE aufweist.

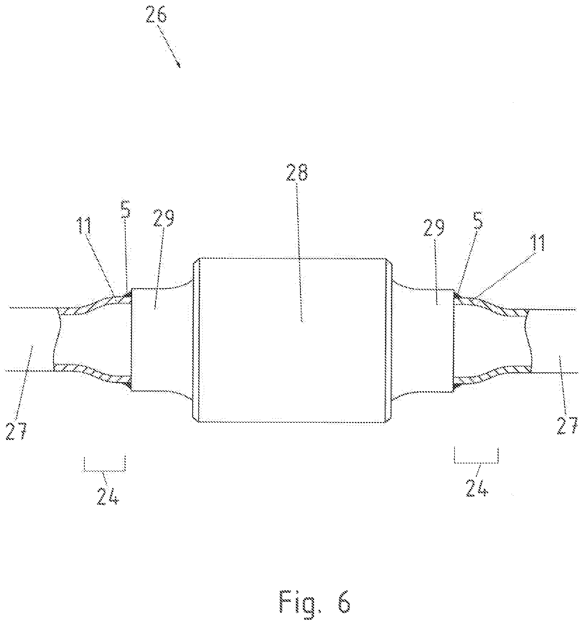

Figur 6 zeigt einen Rohrstabilisator 26 mit zwei Rohrstabilisatorhälften 27 und einen Aktuator 28. Die Rohrstabilisatorhälften 27 sind mit den Rohrenden 11, 24 in einem jeweiligen Anbindungsbereich 29 des Aktuators 28 mit diesem gekoppelt. Die Koppelung ist dabei durch eine Fügenaht 5 zwischen Rohrendbereich 24 und Anbindungsbereich 29 hergestellt.

### Bezugszeichen:

- 1 -: Stabilisator
- 2 -: Flansch
- 3 -: Anschlussbereich
- 4 -: Anschlussstutzen
- 5 -: Fügenaht
- 6 -: Stabilisatorprofil
- 7 -: Wärmeeinflusszone
- 8 -: Aufweitung
- 9 -: Außendurchmesser zu 8
- 10 -: Außendurchmesser zu 4
- 11 -: Rohrende
- 12 -: Profilrichtung
- 13 -: Anbindungsabschnitt
- 14 -: Rohrabschnitt
- 15 -: Rohrprofil
- 16 -: I-Naht
- 17 -: flanschseitiges Ende
- 18 -: Außendurchmesser zu 17
- 19 -: Überlappung
- 20 -: Kehlnaht
- 21 -: Rohr
- 22 -: kegelförmiger Abschnitt
- 23 -: Querschnittsfläche
- 24 -: Rohrendbereich
- 25 -: Rohrrichtung
- 26 -: Rohrstabilisator
- 27 -: Rohrstabilisatorhälfte
- 28 -: Aktuator
- 29 -: Anbindungsbereich
- α -: Winkel
- H -: Härteverlauf nach Wärmebehandlung
- L -: Härteverlauf nach thermischem Fügen und vor Wärmebehandlung
- WEZ -: Wärmeeinflusszone
- D1 -: Außendurchmesser Ausgangszustand
- D2 -: Innendurchmesser Ausgangszustand
- D3 -: verringerter Innendurchmesser
- D4 -: Aufweitaußendurchmesser
- D5 -: Aufweitinnendurchmesser
- D6 -: Endaußendurchmesser
- D7 -: Endinnendurchmesser
- WD -: verdickte Wandstärke
- WA -: Wandstärke Ausgangszustand
- WW -: Wandstärker Aufweitvorgang
- WE -: Endwandstärke
- R -: Radius

## Patentansprüche

1. Stabilisator (1, 26), welcher mindestens zwei Stabilisatorkomponenten aufweist, die stoffschlüssig mittels thermischem Fügen miteinander gekoppelt sind, wobei eine durch das thermische Fügen entstandene Wärmeeinflußzone (7) nach der Koppelung wärmebehandelt ist, **dadurch gekennzeichnet, dass** die Wärmebehandlung in mehreren Stufen und/oder Schritten erfolgt ist und die Wärmebehandlung gezielt auf die Wärmeeinflusszone gerichtet durchgeführt ist, wobei die wärmebehandelte Wärmeeinflusszone (7) durch Verfestigungsstrahlen nachbehandelt ist.

2. Stabilisator nach Anspruch 1, **dadurch gekennzeichnet, dass** die Stabilisatorkomponenten durch eine umlaufende Fügenaht (5) miteinander gekoppelt sind, wobei die Fügenaht (5) und die die Fügenaht (5) umgebende Wärmeeinflußzone (7) wärmebehandelt sind.

3. Stabilisator nach Anspruch 1 oder 2, **dadurch gekennzeichnet, dass** zwei Stabilisatorhälften (6, 27) über einen Aktuator miteinander verbunden sind.

4. Stabilisator nach Anspruch 3, **dadurch gekennzeichnet, dass** eine Stabilisatorhälfte (6, 27) einen Flansch (2) und ein an den Flansch (2) stoffschlüssig gekoppeltes Stabilisatorprofil (6) aufweist.

5. Stabilisator nach Anspruch 4, **dadurch gekennzeichnet, dass** das Stabilisatorprofil (6) als Rohrprofil (15) und/oder Profil aus Vollmaterial hergestellt ist.

6. Stabilisator nach Anspruch 4 oder 5, **dadurch gekennzeichnet, dass** der Flansch (2) profilseitig einen Anschlussbereich (3) aufweist, wobei der Anschlussbereich (3) vorzugsweise als Anschlussstutzen (4) ausgebildet ist.

7. Stabilisator nach einem der Ansprüche 3 bis 6, **dadurch gekennzeichnet, dass** eine Stabilisatorhälfte (6, 27) ein Rohr (21) aufweist, wobei das Rohr (21) an seinem flanschseitigen Rohrende (11) gegenüber einem Ausgangsdurchmesser des Rohres (21) aufgeweitet ist, wobei die Wanddicke am aufgeweiteten Ende vorzugsweise im Wesentlichen der Rohrwanddicke entspricht.

8. Stabilisator nach Anspruch 7, **dadurch gekennzeichnet, dass** der Außendurchmesser (10) des Anschlussstutzens (4) im Wesentlichen dem Außendurchmesser (9) des aufgeweiteten Rohrendes (11) entspricht.

9. Verfahren zur Herstellung eines Stabilisators (1, 26), wobei mindestens zwei Stabilisatorkomponenten mittels thermischem Fügen miteinander verbunden werden, **dadurch gekennzeichnet, dass** die durch das thermische Fügen entstandene Wärmeeinflusszone (7) in mehreren Stufen und/oder Schritten wärmebehandelt wird und die Wärmebehandlung gezielt auf die Wärmeeinflusszone gerichtet durchgeführt wird und die Wärmeeinflusszone (7) mittels Verfestigungsstrahlen nachbehandelt wird.

10. Verfahren nach Anspruch 9, **dadurch gekennzeichnet, dass** folgende Verfahrensschritte vor der Wärmebehandlung ausgeführt werden:
- Bereitstellen eines Rohres (21, 15);
- Aufstauchen eines Rohrendes (11, 17) des Rohres (21, 15), bei im Wesentlichen konstantem Außendurchmesser und sich verringerndem Innendurchmesser;
- Aufweiten des gestauchten Rohrendes (11, 17) auf ein Endmaß in einem oder mehreren Aufweitvorgängen;
- Stoffschlüssiges Verbinden des aufgestauchten und aufgeweiteten Rohrendes (11, 17) mit einem Anschlussbereich (3) eines Aktuators, vorzugsweise mit einem Flansch (2), mittels thermischem Fügen.

11. Verfahren nach Anspruch 10, **dadurch gekennzeichnet, dass** die Wärmebehandlung durch Induktion und/oder Infraroterwärmung durchgeführt wird.

12. Verfahren nach einem der Ansprüche 10 oder 11, **dadurch gekennzeichnet, dass** die Fügenaht (5, 20) mittels Verfestigungsstrahlen nachbehandelt wird.

13. Verfahren nach einem der Ansprüche 10 bis 12, **dadurch gekennzeichnet, dass** der Stabilisator (1, 26) beschichtet wird.

14. Verfahren nach einem der Ansprüche 10 bis 13, **dadurch gekennzeichnet, dass** das Rohr (21, 15) und/oder die Stabilisatorhälfte (6, 27) gebogen wird.

## Claims

1. Stabiliser (1, 26), which has at least two stabiliser components which are coupled with one another materially by thermal joining, wherein a heat-affected zone (7) produced by the thermal joining is heat-treated after coupling, **characterised in that** the heat treatment is performed in several stages and/or steps and the heat treatment is particularly targeted on the heat-affected zone, wherein the heat-treated heat-affected zone (7) is post-treated by shot-peening.

2. Stabiliser according to claim 1, **characterised in that** the stabiliser components are coupled with one another by a circumferential joint seam (5), wherein the joint seam (5) and the heat-affected zone (7) surrounding the joint seam (5) are heat-treated.

3. Stabiliser according to claim 1 or claim 2, **characterised in that** two stabiliser halves (6, 27) are connected with one another via an actuator.

4. Stabiliser according to claim 3, **characterised in that** a stabiliser half (6, 27) has a flange (2) and a stabiliser profile (6) which is materially coupled to the flange (2).

5. Stabiliser according to claim 4, **characterised in that** the stabiliser profile (6) is constructed as a tube profile (15) and/or profile made of solid material.

6. Stabiliser according to claim 4 or claim 5, **characterised in that** the flange (2) has a connection region (3) on a side facing the profile, wherein the connection region (3) is preferably constructed as a connecting piece (4).

7. Stabiliser according to any one of claims 3 to 6, **characterised in that** a stabiliser half (6, 27) comprises a tube (21), wherein the tube (21) is expanded on a tube end (11) thereof facing the flange relative to an initial diameter of the tube (21), wherein the wall thickness of the expanded tube end preferably corresponds substantially to the wall thickness of the tube.

8. Stabiliser according to claim 7, **characterised in that** the outside diameter (10) of the connecting piece (4) corresponds substantially to the outside diameter (9) of the expanded tube end (11).

9. Method for producing a stabiliser (1, 26), wherein at least two stabiliser components are coupled with one another by thermal joining, **characterised in that** the heat-affected zone (7) produced by thermal joining is heat-treated in several stages and/or steps and the heat treatment is particularly targeted on the heat-affected zone and the heat-affected zone (7) is post-treated by shot-peening.

10. Method according to claim 9, **characterised in that** the following method steps are performed before heat treatment:
- providing a tube (21,15);
- upsetting a tube end (11, 17) of the tube (21, 15) with substantially constant outside diameter and reduced inside diameter;
- expanding the upset tube end (11, 17) to a final dimension in one or more expansion operations;
- materially connecting the upset and expanded tube end (11, 17) with a connection region (3) of an actuator, preferably with a flange (2) by thermal joining.

11. Method according to claim 10, **characterised in that** the heat treatment is performed through induction and/or infrared heating.

12. Method according to claim 10 or claim 11, **characterised in that** the joint seam (5, 20) is post-treated by shot-peening.

13. Method according to any one of claims 10 to 12, **characterised in that** the stabiliser (1, 26) is coated.

14. Method according to any one of claims 10 to 13, **characterised in that** the tube (21, 15) and/or the stabiliser halves (6, 27) are bent.

## Revendications

1. Stabilisateur (1, 26) qui présente au moins deux composants de stabilisateur, qui sont solidement couplés l'un à l'autre au moyen d'une jonction thermique, dans lequel une zone affectée thermiquement (7) produite par la jonction thermique est traitée à chaud après le couplage, **caractérisé en ce que** le traitement thermique est effectué en plusieurs stades et/ou étapes et le traitement thermique est réalisé en se cadrant à dessein sur la zone affectée thermiquement, dans lequel la zone thermiquement affectée traitée à chaud (7) est post-traitée par des rayons de consolidation.

2. Stabilisateur selon la revendication 1, **caractérisé en ce que** les composants de stabilisateur sont couplés l'un à l'autre par une soudure dejonction périphérique (5), dans lequel la soudure de jonction (5) et la zone affectée thermiquement (7) entourant la soudure de jonction (5) sont traitées à chaud.

3. Stabilisateur selon la revendication 1 ou 2, **caractérisé en ce que** deux moitiés de stabilisateur (6, 27) sont liées l'une à l'autre via un actionneur.

4. Stabilisateur selon la revendication 3, **caractérisé en ce qu'**une moitié de stabilisateur (6, 27) présente une bride (2) et un profil de stabilisateur (6) couplé à la bride (2) en mode venu de matière.

5. Stabilisateur selon la revendication 4, **caractérisé en ce que** le profil de stabilisateur (6) se présente sous la forme d'un profil tubulaire (15) et/ou d'un profil de matériau plein.

6. Stabilisateur selon la revendication 4 ou 5, **caractérisé en ce que** la bride (2) présente côté profil une zone de raccordement (3), dans lequel la zone de raccordement (3) se présente de préférence sous la forme d'une tubulure de raccordement (4).

7. Stabilisateur selon l'une quelconque des revendications 3 à 6, **caractérisé en ce qu'**une moitié de stabilisateur (6, 27) présente un tube (21), dans lequel le tube (21) est évasé à son extrémité côté bride (11) vis-à-vis d'un diamètre de sortie du tube (21), dans lequel l'épaisseur de paroi à l'extrémité évasée correspond de préférence sensiblement à l'épaisseur de paroi du tube.

8. Stabilisateur selon la revendication 7, **caractérisé en ce que** le diamètre externe (10) de la tubulure de raccordement (4) correspond sensiblement au diamètre externe (9) de l'extrémité de tube évasée (11).

9. Procédé de fabrication d'un stabilisateur (1, 26), dans lequel au moins deux composants de stabilisateur sont reliés l'un à l'autre au moyen d'une jonction thermique, **caractérisé en ce que** la zone affectée thermiquement (7) produite par la jonction thermique est traitée à chaud en plusieurs stades et/ou étapes et le traitement thermique est réalisé à dessein en se cadrant sur la zone affectée thermiquement et la zone affectée thermiquement (7) est post-traitée par des rayons de consolidation.

10. Procédé selon la revendication 9, **caractérisé en ce que** les étapes de procédé suivantes sont réalisées avant le traitement thermique :
- préparation d'un tube (21, 15) ;
- refoulement d'un extrémité (11,17) du tube (21, 15) en sorte de présenter un diamètre externe sensiblement constant et un diamètre interne qui se réduit ;
- évasement de l'extrémité de tube refoulée (11, 17) pour atteindre une mesure finale en une ou plusieurs opérations de refoulement ;
- liaison d'un seul tenant de l'extrémité de tube refoulée et évasée (11, 17) avec une zone de raccordement (3) d'un actionneur, de préférence avec une bride (2), par jonction thermique.

11. Procédé selon la revendication 10, **caractérisé en ce que** le traitement thermique est effectué par induction et/ou par chauffage aux infrarouges.

12. Procédé selon l'une quelconque des revendications 10 ou 11, **caractérisé en ce que** la soudure de jonction (5, 20) est post-traitée par des rayons de consolidation.

13. Procédé selon l'une quelconque des revendications 10 à 12, **caractérisé en ce que** le stabilisateur (1, 26) est revêtu.

14. Procédé selon l'une quelconque des revendications 10 à 13, **caractérisé en ce que** le tube (21, 15) et/ou la moitié de stabilisateur (6, 27) est ou sont cintrés.
